# EUROPEAN PATENT APPLICATION

(11) **EP 0 796 831 A1**
(43) Date of publication of application: **24.09.1997**
(21) Application number: 96301824.7
(22) Date of filing: 18.03.1996
(51) Int. Cl.: C04B 38/00, C04B 38/06

(54) **Method of producing porous ceramic molded material**

(71) Applicant: Matsushita, Mitsuhiro, Tokorozawa-shi, Saitama 359 (JP); Inamura, Shinpei, Bunkyo-ku, Tokyo 113 (JP)
(72) Inventor: Matsushita, Mitsuhiro, Tokorozawa-shi, Saitama 359 (JP); Matsushita, Hitomi, Tokorozawa-shi, Saitama 359 (JP)
(74) Representative: Bubb, Antony John Allen

(57) **Abstract**

A porous ceramic molded material producing method which enables pores to be readily formed in a ceramic molded material without any residue while making it possible to control the porosity, the pore size, etc. in the porous ceramic molded material produced. A ceramic base in a dry or wet state is mixed with a super absorbent polymer, and the mixture is molded into a predetermined shape. Then, the molded material is subjected to dielectric heating in a high-frequency dielectric heater to form a dried molded material in which the base has become porous. Thereafter, the dried molded material is fired in a firing oven.

## Description

### BACKGROUND OF THE INVENTION

The present invention relates to a method of producing a porous ceramic molded material. More particularly, the present invention relates to a porous ceramic molded material producing method whereby open pores with a desired pore size can be readily formed in any ceramic molded material at a desired porosity.

Porous ceramics are used an heat-insulating refractory materials, lightweight refractory materials, sound-insulating materials, dust filtering materials, etc.

Conventionally, porous ceramics are produced is follows: A ceramic raw material is mixed with a foaming agent, a blowing agent, or finely-divided particles, fibers, etc., which disappear during firing process, and the mixture in molded into a desired shape and then fired at high temperature.

However, it has heretofore been difficult to attain desired porous ceramic molded materials. For example, if a molded material mixed with organic fibers is fired, the organic fibers are carbonized in the firing step and do not satisfactorily disappear, but undesirably remain in the fired material. The remaining fibers close pores in the fired material, making it impossible to form favorable pores as desired. Further, it has heretofore been impossible to control the porosity, that is, the quantity of pores formed in a porous ceramic molded material.

### SUMMARY OF THE INVENTION

The present inventor conducted exhaustive studies to solve the above-described problems and, as a result, developed a porous ceramic molded material producing method which enables pores to be readily formed in a ceramic molded material without any residue while making it possible to control the porosity, the pore size, etc. in the porous ceramic molded material produced.

The present invention provides a method of producing a porous ceramic molded material, which includes the steps of: adding a super absorbent polymer powder to a ceramic base in a semidry or wet state, and mixing them together; molding the resulting mixture into a predetermined shape to form a molded material; subjecting the molded material to dielectric heating in a high-frequency dielectric heater to form a dried molded material in which the base has become porous; and firing the dried molded material in a firing oven.

In addition, the present invention provides a method of producing a porous ceramic molded material, which includes the steps of: adding a super absorbent polymer swollen with water to a ceramic base in a dry or wet state, and mixing them together; molding the resulting mixture into a predetermined shape to form a molded material; subjecting the molded material to dielectric heating in a high-frequency dielectric heater to form a dried molded material in which the base has become porous; and firing the dried molded material in a firing oven.

As the super absorbent polymer, it is preferable to use a water-soluble electrolytic polymer having an ionic group in which a low degree of crosslinking has been introduced to form a three-dimensional network. Examples of usable polymers are polyacrylate compounds, a saponified vinyl acetate-acrylic ester copolymer, a starch-acrylic acid graft polymer, etc.

In the present invention, the super absorbent polymer may be fibrous.

In the present invention, the super absorbent polymer swollen with water may be in the form of microspheres having a particle diameter in the range of from 0.1 millimeters to 2.0 millimeters.

The super absorbent polymer swollen with water may have a super absorbent polymer-to-water ratio in the range of from 1:50 to 1:500.

The high-frequency dielectric heating is preferably carried out under the conditions that the frequency is about 2,450 MHz, the electric power is from 180 W to 600 W, and the dielectric heating time is from 10 minutes to 60 minutes.

In the above-described methods, the dried molded material may be fired in the firing oven after it has been machined into a desired shape and dimension by cutting-off and/or cutting.

The ceramic base may be clay.

The ceramic base may be at least one selected from the group consisting of a clay mineral, chamotte, siliceous sand, pottery stone, feldspar, alumina, magnesia, mullite, zirconia, blast surface slag, shirasu, fly ash, silicon carbide, aluminum nitride, and silicon nitride.

The ceramic base may contain a cold binder and/or a hot binder.

Further, it is preferable to provide a coating layer on the surface of the fired porous ceramic molded material.

Still other objects and advantages of the invention will in part be obvious and will in part be apparent from the specification.

The invention accordingly comprises the features of construction, combinations of elements, and arrangement of parts which will be exemplified in the construction, hereinafter set forth, and the scope of the invention will be indicated in the claims.

### DESCRIPTION OF THE PREFERRED EMBODIMENTS

The present invention will be described below in detail by way of Examples.

### Example 1:

50 g of clay (water content: 20%) was kneaded with 50 g of a swollen polymer prepared by swelling 0.5 g of a super absorbent polymer (polyacrylate compound) with 49.5 g of water, and the kneaded mixture was introduced into a mold to form a block-shaped molded material.

Then, the block-shaped molded material was subjected to dielectric heating for 20 minutes in a dielectric heater (a microwave oven having a high-frequency output of 180 W to 600 W at 2,450 MHz). In the dielectric heating step, particles of the super absorbent polymer swollen with water in the kneaded material evaporated rapidly, and the base of the molded material was dried. At the same time, spaces which had been occupied by the particles were left as a large number of fine cavities (i.e. pores), and these fine cavities remained an open pores interconnected by connecting pores.

Thus, the resulting dried molded material was a hard porous material in which the greater art of the interior consisted of open pores.

Thereafter, the porous molded material was fired for 2 hours at 1,100°C in an electric oven.

As a result of the firing process, it was possible to obtain a lightweight porous ceramic molded material the interior of which had open pores and which has a high hardness and a high strength. The bulk specific gravity of the product was 0.6, and the heat resistance temperature was 1,350°C.

### Example 2:

50 g of clay (water content: 20%) was kneaded with 50 g of a swollen polymer prepared by swelling 0.2 g of a super absorbent polymer with 49.8 g of water, and the kneaded mixture was introduced into a mold to form a block-shaped molded material.

Then, the block-shaped molded material was subjected to dielectric heating in a dielectric heater in the same way as in Example 1. Thereafter, the molded material was fired for 1 hour at 1,200°C in a gas oven.

As a result of the firing process, it was possible to obtain a lightweight porous ceramic molded material the interior of which had open pores and which had a high hardness and a high strength. The bulk specific gravity of the product was 0.4, and the heat resistance temperature was 1,400°C.

### Example 3:

A molded material was obtained in the same way as in Example 1 except that a mixture of 25 g of chamotte and 25 g of clay (water content: 20%) was used in place of 50 g of clay (water content: 20%). Then, the molded material was subjected to dielectric heating in a dielectric heater in the same way as in Example 1. Thereafter, the dried molded material was fired for 2 hours at 1,300°C in a gas oven.

As a result of the firing process, it was possible to obtain a lightweight porous ceramic molded material the interior of which had open pores and which had a high hardness and a high strength. The bulk specific gravity of the product was 0.5, and the heat resistance temperature was 1,400°C.

### Example 4:

50 g of alumina fine powder (containing a MnO sintering assistant) was uniformly kneaded with 50 g of a swollen polymer prepared by swelling 0.5 g of a super absorbent polymer (polyacrylate compound) with 49.5 g of water, and the kneaded mixture was introduced into a mold to form a thick plate-shaped molded material.

It should be noted that testing was conducted by using three different kinds of polyacrylic super absorbent polymer which had different overage particle diameters: (1) from 20 µm to 30 µm; (2) from 70 µm to 140 µm; and (3) from 200 µm to 300 µm.

The polyacrylic super absorbent polymers used had a water absorption magnification of from 80 to 120 times.

Then, the thick plate-shaped molded material was subjected to dielectric heating for 20 minutes to 60 minutes in a dielectric heater (a microwave oven having a high-frequency output of 180 W to 600 W at 2,450 MHz).

In the dielectric heating stop, particles of the super absorbent polymer swollen with water in the kneaded material evaporated rapidly, and the base of the molded material was dried. At the same time, spaces which had been occupied by the particles were left as a large number of fine cavities (i.e. pores), and those fine cavities remained as open pores interconnected by connecting pores.

Thus, the resulting dried molded material was a hard porous material in which the greater part of the interior consisted of open pores. In the case of a dried molded material obtained by uniformly kneading alumina fine powder with a swollen polyacrylic super absorbent polymer having an average particle diameter of from 20 µm to 30 µm, as stated above (1), and carrying out the above-described dielectric heating, the size of open pores in the dried molded material was from 90 µm to 202 µm. In the case of the above (2), the pore size was from 315 µm to 945 µm. In the case of the above (3), the pore size was from 900 µm to 1,350 µm.

Thus, according to the present invention, the size of open pores in the dried ceramic base can be controlled as desired by selectively using super absorbent polymers of various particle diameters. That is, the use of a super absorbent polymer of a small particle diameter makes it possible to reduce the size of open pores in the dried ceramic base; the use of a super absorbent polymer of a large particle diameter makes it possible to increase the size of open pores in the dried ceramic base.

Thereafter, the porous molded material was fired for 2 hours at 1,500°C in an electric oven.

As a result of the firing process, it was possible to obtain a lightweight porous alumina ceramic thick plate-shaped molded material the interior of which had open pores and which had a considerably high hardness and a considerably high strength. The bulk specific gravity of the product was about 0.8 to 1.2. The size of open pores in the porous alumina ceramic fired product thus obtained was slightly smaller than those of the above-described dried products (1) to (3).

Thus, the present invention enables pores to be formed in a porous ceramic molded material while making it possible to control the porosity, the pore size, etc. in the porous ceramic molded material produced.

Further, the present invention enables open pores to be readily formed without any residue, such as carbon, in the porous ceramic molded material produced.

The porous ceramic molded material produced by the present invention can be used as an excellent lightweight heat-insulating material, a sound-insulating material, etc.

## Claims

1. A method of producing a porous ceramic molded material, said method comprising the steps of:
adding a super absorbent polymer powder to a ceramic base in a semidry or wet state, and mixing them together;
molding the resulting mixture into a predetermined shape to form a molded material;
subjecting said molded material to dielectric heating in a high-frequency dielectric heater to form a dried molded material in which said base has become porous; and
firing said dried molded material in a firing oven.

2. A method of producing a porous ceramic molded material, said method comprising the steps of:
adding a super absorbent polymer swollen with water to a ceramic base in a dry or wet state, and mixing them together;
molding the resulting mixture into a predetermined shape to form a molded material;
subjecting said molded material to dielectric heating in a high-frequency dielectric heater to form a dried molded material in which said base has become porous; and
firing said dried molded material in a firing oven.

3. A method of producing a porous ceramic molded material according to claim 1 or 2, wherein said super absorbent polymer is fibrous.

4. A method of producing a porous ceramic molded material according to claim 2, wherein said super absorbent polymer swollen with water is in the form of microspheres, said microspheres having a particle diameter in a range of from 0.1 millimeters to 2.0 millimeters.

5. A method of producing a porous ceramic molded material according to any one of claims 2 to 4, wherein said super absorbent polymer swollen with water has a super absorbent polymer-to-water ratio in a range of from 1:50 to 1:500.

6. A method of producing a porous ceramic molded material according to any one of claims 1 to 5, wherein said dried molded material is fired in the firing oven after it has been machined into a desired shape and dimension by cutting-off and/or cutting.

7. A method of producing a porous ceramic molded material according to any one of claims 1 to 6, wherein said ceramic base is clay.

8. A method of producing a porous ceramic molded material according to any one of claims 1 to 7, wherein said ceramic base is a mixture of a binder, water, and at least one selected from the group consisting of a clay mineral, chamotte, siliceous sand, pottery stone, feldspar, alumina, magnesia, mullite, zirconia, blast surface slag, shirasu, fly ash, silicon carbide, aluminum nitride, and silicon nitride.

9. A method of producing a porous ceramic molded material according to any one of claims 1 to 7, wherein said ceramic base contains a binder.
